# EUROPÄISCHE PATENTSCHRIFT

(11) **EP 1 269 932 B1**
(45) Veröffentlichungstag und Bekanntmachung des Hinweises auf die Patenterteilung: **14.06.2006**
(21) Anmeldenummer: 02011136.5
(22) Anmeldetag: 21.05.2002
(51) Int. Cl.: A61C 8/00

(54) **Dentalimplantat-Aufbau**
Dental implant assembly
Ensemble implant dentaire

(30) Priorität: 29.06.2001 DE 20110768 U
(43) Veröffentlichungstag der Anmeldung: 02.01.2003
(73) Patentinhaber: BEGO Implant Systems GmbH & Co. KG, 28359 Bremen (DE)
(72) Erfinder: Erlenmayer, Udo, 28879 Grasberg (DE); Pukropp, Claus, 28357 Bremen (DE)
(74) Vertreter: Eisenführ, Speiser & Partner

(56) Entgegenhaltungen:
- EP-A- 0 313 222
- WO-A-01/50977
- FR-A- 2 745 998
- US-A- 5 049 073
- US-A- 5 281 140
- US-A- 6 102 702
- US-B1- 6 168 435
- US-B1- 6 227 856
- US-B1- 6 244 867
- US-B1- 6 250 922

## Beschreibung

Die Erfindung betrifft einen Dentalimplantat-Aufbau aus einem insbesondere keramischen Pfosten und einem damit formschlüssig verbundenen metallischen Verbindungsstück, der mittels einer den Pfosten und das Verbindungsstück zentrisch durchsetzenden, sich an einem Innen-Ringbund des Pfostens mit ihrem Kopf abstützenden Schraube am Implantat befestigbar ist, wobei der Pfosten mit einem äußeren Ringbund einen ringförmigen Abschnitt des Verbindungsstücks in Achsrichtung umfänglich übergreift, und Mittel zur Verdrehsicherung zwischen dem Pfosten und dem Verbindungsstück vorgesehen sind.

Solche zweiteiligen Aufbauten, die mittels genauer Passflächen an einem Kieferimplantat befestigt werden, sind als Träger von Dentalprothesen wie Brücken, Kronen o. dgl. bekannt. Gegenüber einem einteiligen Keramikpfosten (statt Keramik ist auch die Verwendung von Kunststoff möglich) besteht der Vorteil des zweiteiligen Aufbaus darin, dass das metallische Zwischenstück - im allgemeinen aus Titan oder einem vergleichbaren Werkstoff - einen exakteren und damit zuverlässigeren Anschluss an das Implantat erlaubt. Der Durchmesser des die zentrale Schraube aufnehmenden Implantats ist aus biologischen Gründen, insbesondere durch die Abmessungen des Kiefers begrenzt. Gleichwohl muss eine exakte und verdrehsichere Abstützung des Aufbaus gewährleistet sein. Das ist mit einem metallischen Zwischenstück, welches beispielsweise mit einem Sechskant in eine entsprechende Stirnöffnung des Implantats eingreift und sich auf der Stirnfläche des Implantats abstützt, besser zu bewerkstelligen als mit einem insgesamt aus Keramik (oder Kunststoff) hergestellten einstückigen Aufbau. Für die Verbindung des Zwischenstücks zum Pfosten - also auf der anderen Stirnseite des Zwischenstücks - steht ein größerer Durchmesser zur Verfügung.

Bislang bekannte zweiteilige Implantataufbauten leiden jedoch an dem Nachteil unzureichender Verdrehsicherheit zwischen dem Pfosten und dem Zwischenstück. Ist deren Verbindung nicht absolut drehfest, kann sich der Implantataufbau um die Zentralachse bewegen. Selbst eine geringe derartige Bewegung aber beeinträchtigt die Qualität und Brauchbarkeit der Prothese. Dabei ist zu berücksichtigen, dass große Kaukräfte auf relativ kleine Flächen wirken, so dass die übliche Verklebung zwischen Pfosten und Zwischenstück mit Hilfe eines geeigneten Zements sich lockern kann.

Bei dem eingangs geschilderten, aus der US 6,168,435 B1 bekannten Aufbau bestehen die Mittel zur Verdrehsicherung zwischen dem Pfosten und dem Verbindungsstück aus einer Abplattung am ringförmigen Abschnitt des Verbindungsstücks, welche bei Einbringen von Klebstoff in den dadurch gegenüber der ringförmigen Innenfläche des übergreifenden Pfostens entstandenen Raum das relative Verdrehen der beiden Aufbauteile verhindern sollte.

Die Erfindung will eine Verdrehsicherung zwischen Pfosten und Verbindungsstück für praktisch alle Relativstellungen dieser Aufbauteile schaffen. Sie besteht darin, dass sowohl in der Innenfläche des äußeren Pfosten-Ringbundes als auch in der Außenfläche des ringförmigen Verbindungsstück-Abschnitts einander zumindest teilweise überdeckende Ausnehmungen zur Aufnahme verkeilenden Werkstoffs vorgesehen sind. Die Ausnehmungen bilden Taschen, die in jeder Relatvistellung der Aufbauteile jedenfalls partiell einander gegenüberliegen und einen in Umfangsrichtung formschlüssig wirkenden Pflock aufnehmen, der insbesondere aus in situ aushärtendem Material gebildet wird. Um sicherzustellen, dass sich im gewünschten Einbauzustand mindestens eine derartige Pflock- oder Keiltasche bildet, weil sich die Ausnehmungen der Partner zumindest teilweise gegenüberliegen, ist vorzugsweise vorgesehen, dass eine ungleiche Anzahl solcher Ausnehmungen einerseits am Pfosten, andererseits am Zwischenstück ausgebildet sind.

Weitere bevorzugte Ausführungen sind Gegenstand von Unteransprüchen.

Die Zeichnung veranschaulicht die Erfindung an einem Ausführungsbeispiel. Darin zeigt:
- Fig. 1: einen Längsschnitt durch ein Implantat mit einem erfindungsgemäßen Aufbau;
- Fig. 2: eine demgegenüber vergrößerte Darstellung (halb Längsschnitt, halb Seitenansicht) des zugehörigen Verbindungsstücks;
- Fig. 3: eine Stirnansicht in Richtung des Pfeiles III in Fig. 2;
- Fig. 4: eine Stirnansicht in Richtung des Pfeiles IV in Fig. 2;
- Fig. 5: eine Seitenansicht in Richtung des Pfeiles V in Fig. 4;
- Fig. 6: eine perspektivische Ansicht des Verbindungsstücks von der Implantatseite her;
- Fig. 7: perspektivische Ansichten (a - d) des Verbindungsstücks von der Aufbauseite her; und
- Fig. 8: eine perspektivische Ansicht des Pfostens von der Seite des Verbindungsstücks her.

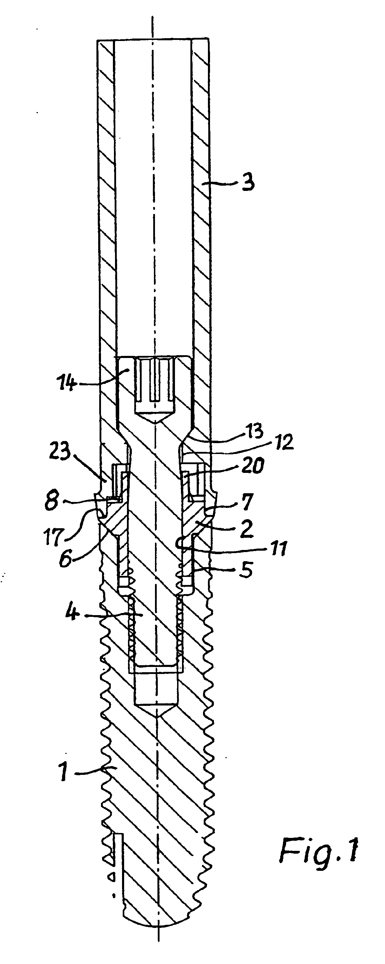

Figur 1 zeigt einen Dentalimplantat-Aufbau in seinem mit einem Implantat 1 verschraubten Zustand. Der Aufbau besteht aus dem Verbindungsstück 2, dem Pfosten 3 und der alles verbindenden Schraube 4. Das Verbindungsstück 2 ist sowohl mit dem Implantat 1 als auch mit dem Pfosten 3 drehfest verbunden, und zwar formschlüssig.

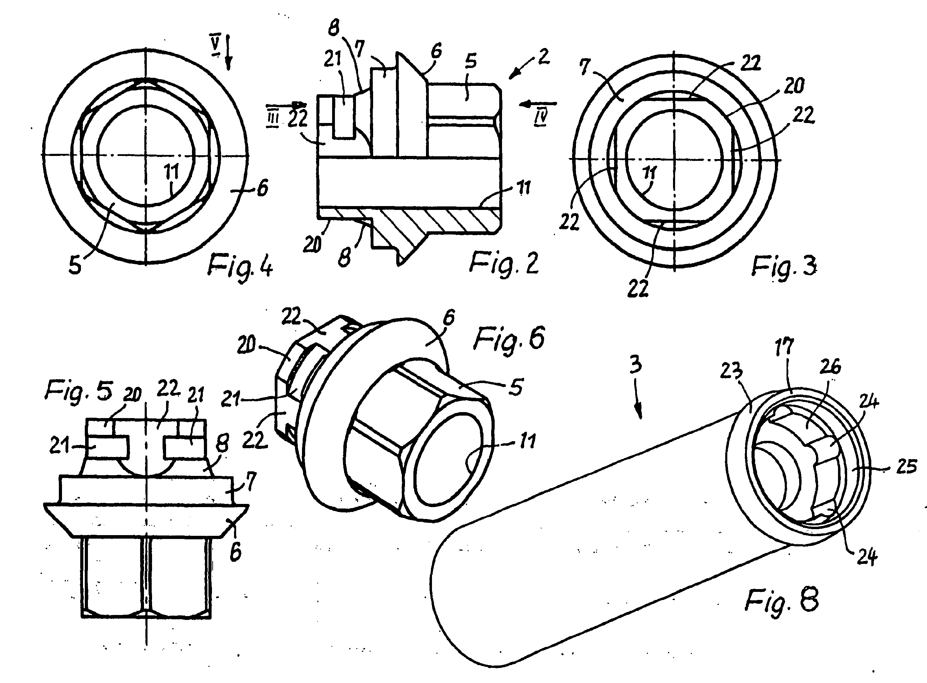

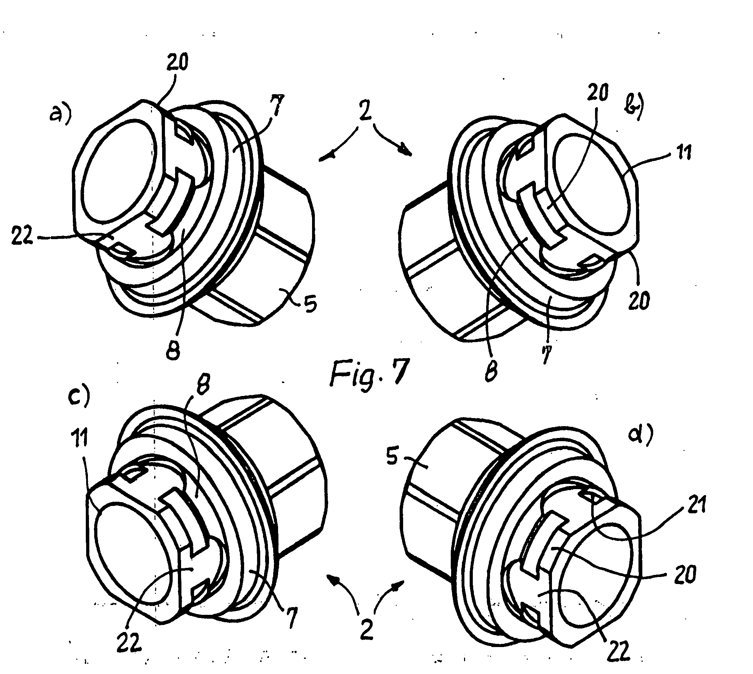

Zu diesem Zweck hat das metallische, vorzugsweise aus Titan bestehende Verbindungsstück 2 (Fig. 2 - 7) ein als Sechskant 5 geformtes Ende, mit dem es in das Implantat eingreift; der Lagesicherung gegenüber dem Implantat 1 dient ein anschließender Ringbund 6 mit einer konischen Stirnseite. Auf seiner anderen, dem Pfosten 3 zugewandten und in diesen eingreifenden Seite hat das Verbindungsstück 2 zunächst - im Anschluss an den Ringbund 6 - einen im wesentlichen zylindrischen Ringbund 7 und im Anschluss hieran einen Außenkonus 8, dessen Basisdurchmesser etwas kleiner ist als der Durchmesser des Ringbundes 7. Darauf folgt ein in der Grundform zylindrischer Abschnitt 20, in den einerseits eine Ringnut 21 eingelassen ist, andererseits sind darin im 90°-Abstand, also gleichmäßig am Umfang verteilt, vier Abplattungen 22 vorgesehen, die sich zur Mitte des Verbindungsstücks 2 hin kreisförmig in den Außenkonus 8 erstrecken. Die Abplattungen 22 bilden zusammen mit der Innenfläche des zylindrischen Abschnitts 16 Ausnehmungen zur Aufnahme eines verkeilenden Werkstoffs, etwa eines bei der Montage eingebrachten Zements; Entsprechendes gilt für die Ringnut 21 bzw. deren nicht durch die Abplattungen 22 weggeschnittenen Abschnitte. Eine Durchgangsbohrung 11 durchsetzt das Verbindungsstück 2 auf seiner gesamten axialen Länge.

Auf der konischen Seite 13 eines Ringbundes 12 des Pfostens 3 stützt sich der entsprechend konisch ausgebildete Kopf 14 der Schraube 4 ab und findet dort sein Widerlager. Mit seiner stimseitigen Ringfläche 17 liegt der Pfosten 3 an der ihm zugewandten Ringfläche des Ringbundes 6 am Verbindungsstücke 2 an und erhält auf diese Weise eine präzise Auflage. Außenseitig erstreckt sich bei diesem Ausführungsbeispiel der Pfosten 3 von der Ringfläche 17 im wesentlichen zylindrisch nach oben und dient zur Befestigung der eigentlichen Zahnprothese.

Mit einem äußeren Ringabschnitt 23 übergreift der Pfosten 3 - über den gesamten Umfang - den ihm zugewandten Teil des Verbindungsstücks 2. Seine Innenfläche weist im Anschluss an die stirnseitige Ringfläche 17, mit der der Pfosten 3 auf dem Implantat 1 aufsitzt, zwei gestufte zylindrische Bereiche auf. Der auf die Ringfläche 17 folgende Bereich 25 hat einen größeren Durchmesser als der anschließende Bereich 26, in dem mehrere im Querschnitt halbrundförmige Nuten 24 am Umfang gleichmäßig verteilt angeordnet sind. Im zusammengebauten Zustand bilden die Nuten 24 mit den Abplattungen 22 taschenförmige Ausnehmungen, in die ein verkeilender Werkstoff eingebracht wird, beispielsweise ein im Dentalbereich üblicher Zement. Eine ungleiche Anzahl von Nuten und Abplattungen gewährleistet, dass es in jeder Dreh-Relativlage von Verbindungsstück 2 und Pfosten 3 zur Bildung mindestens einer solchen Ausnehmung kommt.

## Patentansprüche

1. Dentalimplantat-Aufbau aus einem insbesondere keramischen Pfosten (3) und einem damit formschlüssig verbundenen metallischen Verbindungsstück (2), der mittels einer den Pfosten und das Verbindungsstück zentrisch durchsetzenden, sich an einem Innen-Ringbund (13) des Pfostens mit ihrem Kopf (14) abstützenden Schraube (4) am Implantat (1) befestigbar ist, wobei der Pfosten (3) mit einem äußeren Ringbund (23) einen ringförmigen Abschnitt (20) des Verbindungsstücks (2) in Achsrichtung umfänglich übergreift, und Mittel zur Verdrehsicherung zwischen dem Pfosten und dem Verbindungsstück vorgesehen sind, und wobei in der Außenfläche des Abschnitts (20) Ausnehmungen vorgesehen sind,
**dadurch gekennzeichnet, dass** auch in der Innenfläche des äußeren Ringbundes (23) Ausnehmungen vorgesehen sind, die zumindest teilweise die Ausnehmungen der Außenfläche des Abschnitts (20) überdecken zur Aufnahme verkeilenden Werkstoffs.

2. Aufbau nach Anspruch 1, **dadurch gekennzeichnet, dass** in der Innenwandung des äußeren Ringbundes (23) mehrere koaxiale Nuten (24) am Umfang verteilt angeordnet sind.

3. Aufbau nach Anspruch 2, **dadurch gekennzeichnet, dass** die Innenwandung des äußeren Ringbundes (23) in Achsrichtung zwei zylindrische Bereiche hat, deren erster Bereich (25) mit größerem Durchmesser an die Stimfläche (17) des Pfostens (3) anschließt und nur der folgende Bereich (26) von kleinerem Durchmesser mit den Nuten (24) versehen ist.

4. Aufbau nach einem der Ansprüche 1 bis 3, **dadurch gekennzeichnet, dass** die im wesentlichen zylindrische Außenfläche des Abschnitts (20) des Verbindungsstücks (2) mehrere am Umfang verteilte sehnenförmige Abplattungen (22) aufweist, die im Zusammenwirken mit den Nuten (24) in der Innenfläche des Pfosten-Ringbundes (23) taschenartige Freiräume bilden.

5. Aufbau nach Anspruch 4, **dadurch gekennzeichnet, dass** in die Außenfläche des Abschnitts (20) eine Ringnut (21) eingelassen ist.

6. Aufbau nach Anspruch 2 und 4, **dadurch gekennzeichnet, dass** eine ungleiche Anzahl von Nuten (24) und Abplattungen (22), jeweils gleichmäßig am Umfang verteilt, vorgesehen ist.

## Claims

1. A dental implant assembly composed of a particularly ceramic post (3) and a metallic connecting piece (2) connected thereto in a positively locking manner, which may be fixed to the implant (1) by means of a screw (4) passing centrally through the post and the connecting piece and supported with its head (14) against an inner annular flange (13) of the post, an outer annular flange (23) of the post (3) peripherally overlapping an annular portion (20) of the connecting piece (2) in the axial direction, and means for securing against torsion being provided between the post and the connecting piece, and recesses being provided in the outer surface of the portion (20),
**characterised in that** recesses are also provided in the inner surface of the outer annular flange (23), which cover at least in part the recesses of the outer surface of the portion (20) in order to receive wedging material.

2. An assembly according to Claim 1, **characterised in that** several coaxial grooves (24) are arranged in the inner wall of the outer annular flange (23), distributed on the periphery.

3. An assembly according to Claim 2, **characterised in that** the inner wall of the outer annular flange (23) has two cylindrical regions in the axial direction, of which the first region (25) having a larger diameter adjoins the end face (17) of the post (3) and only the following region (26) of smaller diameter is provided with the grooves (24).

4. An assembly according to one of Claims 1 to 3, **characterised in that** the substantially cylindrical outer surface of the portion (20) of the connecting piece (2) has several chord-shaped flattenings (22) distributed on the periphery, which in cooperation with the grooves (24) in the inner surface of the post's annular flange (23) form pocket-like free spaces.

5. An assembly according to Claim 4, **characterised in that** an annular groove (21) is let into the outer surface of the portion (20).

6. An assembly according to Claim 2 and 4, **characterised in that** an uneven number of grooves (24) and flattenings (22) is provided, each evenly distributed on the periphery.

## Revendications

1. Structure pour implant dentaire formée par un tenon (3) en particulier en céramique et une pièce de liaison (2) métallique, assemblée par conjugaison de forme avec celui-ci, laquelle structure peut être fixée sur l'implant (1) au moyen d'une vis (4), qui traverse le tenon et la pièce de liaison en leur centre et qui vient en appui avec sa tête (14) sur un épaulement annulaire intérieur (13) du tenon, le tenon (3) s'engageant avec un épaulement annulaire extérieur (23) dans le sens axial tout autour d'une partie (20) annulaire de la pièce de liaison (2), et des moyens anti-rotation sont prévus entre le tenon et la pièce de liaison, et des évidements étant prévus dans la face extérieure de la partie (20),
**caractérisée en ce qu'**il est également prévu des évidements dans la face intérieure de l'épaulement annulaire extérieur (23), lesquels couvrent au moins en partie les évidements dans la face extérieure de la partie (20) pour recevoir un matériau de calage.

2. Structure selon la revendication 1, **caractérisée en ce que** dans la paroi intérieure de l'épaulement annulaire extérieur (23) sont réalisées plusieurs rainures (24) coaxiales réparties sur le pourtour.

3. Structure selon la revendication 2, **caractérisée en ce que** la paroi intérieure de l'épaulement annulaire extérieur (23) comporte deux zones cylindriques dans le sens axial, parmi lesquelles la première zone (25) avec un plus grand diamètre est adjacente à la face frontale (17) du tenon (3) et seule la zone (26) suivante avec un plus petit diamètre est munie des rainures (24).

4. Structure selon l'une quelconque des revendications 1 à 3, **caractérisée en ce que** la surface extérieure sensiblement cylindrique de la partie (20) de la pièce de liaison (2) comporte plusieurs méplats (22) en forme de corde répartis sur le pourtour, qui, conjointement avec les rainures (24) dans la face intérieure de l'épaulement annulaire extérieur (23), forment des espaces libres en forme de poches.

5. Structure selon la revendication 4, **caractérisée en ce qu'**une rainure annulaire (21) est ménagée dans la face extérieure de la partie (20).

6. Structure selon les revendications 2 et 4, **caractérisée en ce qu'**il est prévu un nombre impair de rainures (24) et de méplats (22), qui sont chacun uniformément répartis sur le pourtour.
